# EUROPÄISCHE PATENTANMELDUNG

(11) **EP 2 772 408 A2**
(43) Veröffentlichungstag der Anmeldung: **03.09.2014**
(21) Anmeldenummer: 14000746.9
(22) Anmeldetag: 03.03.2014
(51) Int. Cl.: B62B 3/06, B66F 9/065

(54) **Mobiler Transportpalettenstapler**

(30) Priorität: 01.03.2013 DE 202013001934 U; 02.03.2014 EP 14000740
(71) Anmelder: Barth, Gerhard, 84550 Feichten (DE)
(72) Erfinder: Barth, Gerhard, 84550 Feichten (DE)
(74) Vertreter: Gössmann, Christoph Tassilo

(57) **Zusammenfassung**

Mobiler Transportpalettenstapler, der in Draufsicht ein U-förmiges Grundgerüst (1), das also auf einer Seite nach vorne offen ist, aufweist, dessen Innenmaße den erweiterten Umfang einer Transportpalette aufweist, wobei im unteren Bereich des Palettenstaplers ein höhenverstellbarer Rahmen (2) vorhanden ist, wobei an zumindest zwei Holmen bewegbare Greiter (4) vorhanden sind, die unter die oberen Längsbretter einer Transportpalette eingreifbar sind und die Transportpalette festhalten und die Transportpalette durch eine Hebevorrichtung zumindest eine Transportpalettenhöhe hochhebbar ist, so dass der Transportpalettenstapler sich über eine weitere Transportpalette bewegen kann, wobei der mobile Transportpalettenstapler Vorrichtungen zur Mobilität aufweist.

## Beschreibung

Die Erfindung betrifft einen mobilen Transportpalettenstapler

Bekannt sind sogenannte Hubwägen, die im wesentlichen aus einer an einem Radträger vorgesehenen lenkbaren Achse und aus einem Hubrahmen bestehen, welcher zwei Gabelarme bildet, die an ihrem freien Ende jeweils mit einer Rolle versehen sind. Durch eine Hubeinrichtung, beispielsweise durch eine hydraulische Hubeinrichtung ist der Hubrahmen manuell oder motorisch auf und ab bewegbar. Dieser Hub ist bei den gängigen Hubwägen schon aus konstruktiven Gründen begrenzt, d.h. auf etwa 120 mm beschränkt, reicht aber für den generellen Verwendungszweck derartiger Hubwagen, nämlich für das Bewegen von beladenen Paletten voll aus. Derartige Hubwägen sind insbesondere in Märkten, aber auch in anderen Betrieben weit verbreitert, in denen auf Paletten angelieferte Produkte verkauft, weiterverarbeitet usw. werden und bei denen dann u.a. die Notwendigkeit besteht, die leere Paletten möglichst raumsparend zu stapeln und diese im gestapelten Zustand beispielsweise an den Lieferanten zurückzusenden.

Für das Stapeln leerer Paletten sind Palettenstapelgeräte bekannt. In DE 39 10 705 wird eine Vorrichtung zum Handhaben von stapelbaren Paletten und Palettenstapeln, insbesondere von Werkstückpaletten, beschrieben. In einem Maschinengestell sind vertikal übereinander eine Stapelaufnahme zum Aufnehmen und Halten wenigstens einer Palette, eine Übergabestation und ein Transfermittel zum Überführen von Paletten von der Stapelaufnahme an die Übergabestation und zurück vorgesehen. Unterhalb der Übergabestation ist eine Bereitstellungsstation angeordnet, in der ein weiterer Palettenstapel bereitgehalten wird. Mit einem als Transfermittel vorgesehenen Hubrahmen werden Palettenstapel aus der Bereitstellungsstation in die Stapelaufnahme und einzelne Paletten von der Unterseite des Stapels in der Stapelaufnahme in die Übergabestation transferiert, von wo sie zur weiteren Bearbeitung ausgeschoben werden. Die Arbeitsweise kann auch umgekehrt ablaufen.

DE 198 38 346 Die Erfindung betrifft ein Fördersystem mit einer Stapel- und Entstapelvorrichtung für Paletten, die eine Greifeinheit zum Anheben der Paletten aufweist, und mit einer an die Stapel- und Entstapelvorrichtung angrenzenden Förderbahn für die gleichzeitige Zu- oder Abführung einer Palette unter die von der Greifeinheit angehobenen Paletten. Um eine Stapel- und Entstapelvorrichtung für Paletten zu schaffen, die eine automatisierte Stapelung von kleineren Paletten auf größeren ermöglicht und hierbei eine kompakte Bauweise aufweist, wird vorgeschlagen, daß sich im Bereich der Stapel- und Entstapelvorrichtung zwei Förderbahnen kreuzen, auf der ersten Förderbahn Paletten förderbar sind, deren Grundfläche ein geradzahliges Vielfaches der auf der zweiten Förderbahn geförderten kleineren Paletten ist, und die Greifeinheit (Greifarm) derart ausgebildet ist, daß die kleineren Paletten nebeneinander auf die größeren Paletten stapelbar sind.

Bekannt ist weiterhin ein Palettensammler in Form eines Anbaugerätes an einen Hubwagen. Dieser Palettensammler besteht im wesentlichen aus zwei parallel zu den Gabelarmen des Hubwagens angeordneten Wandelementen. An diese Wandelemente sind insgesamt vier jeweils um eine horizontale Achse schwenkbare Klinken angebracht, und zwar derart, daß diese Klinken jeweils eine Auflage für die unterste Palette eines Palettenstapels bilden. In diesen Palettenstapel können neue Paletten von unten her durch Anheben gegen die bereits vorhandenen Paletten mit den Gabelarmen des Hubwagens eingebracht werden. Voraussetzung für diesen bekannten Palettensammler ist ein Hubwagen, dessen Gabelarme einen Hub größer als die Höhe der Paletten ausführen können. Bei den gängigen und üblicherweise vorhandenen Hubwägen ist aber ein Hub in dieser Größe nicht vorgesehen.

Aufgabe der Erfindung ist es, den Stand der Technik zu verbessern und insbesondere einen Transportpalettenstapler zur Verfügung zu stellen, der mobil und autark ist und möglichst auch mechanisch zu betätigen ist.

Diese Aufgabe wird durch die Merkmale der Ansprüche gelöst.

Gegenstand der Erfindung ist ein mobiler Transportpalettenstapler, der in Draufsicht ein U-förmiges Grundgerüst, das also auf einer Seite nach vorne offen ist, aufweist, dessen Innenmaße den erweiterten Umfang einer Transportpalette aufweist, dadurch gekennzeichnet, dass im unteren Bereich des Palettenstaplers ein höhenverstellbarer Rahmen vorhanden ist, wobei an zumindest zwei Holmen bewegbare Greifer vorhanden sind, die unter die oberen Längsbretter einer Transportpalette eingreifbar sind und die Transportpalette festhalten und die Transportpalette durch eine Hebevorrichtung zumindest eine Transportpalettenhöhe hochhebbar ist, so dass der Transportpalettenstapler sich über eine weitere Transportpalette bewegen kann, wobei der mobile Transportpalettenstapler Vorrichtungen zur Mobilität aufweist.

Das Grundgerüst des erfindungsgemäßen Transportpalettenstapler ist vorzugsweise aus hohlen Stahlrohren oder Stahlstangen aufgebaut. Im wesentlichen wird aus den Stahlrohren oder Stahlstangen ein Gestell gebildet, das in Draufsicht vorzugsweise U-förmig ist und dessen Innenmaße den erweiterten Umfang einer Transportpalette aufweist, das heißt, dass das Grundgerüst des erfindungsgemäßen Transportpalettenstaplers in seinem Innenumfang größer als der Außenumfang einer Transportpalette ist, so dass eine Transportpalette auf jeden Fall in den Transportpalettenstapler passt und noch ausreichend Spielraum im Inneren des Transportpalettenstapler vorhanden ist, um die Transportpaletten nach oben oder unten zu stapeln, also aufzunehmen oder abzulegen. Im unteren Bereich des Transportpalettenstaplers befindet sich ein höhenverstellbarer Rahmen, der zumindest zwei Längsholme, vorzugsweise Stangen, vorzugsweise Vierkantstangen oder Rohre, vorzugsweise Vierkantrohre aus vorzugsweise Stahl oder Kunststoff und verzugsweise einen Querholm, vorzugsweise eine Stange, vorzugsweise Vierkantstange oder Rohr, vorzugsweise Vierkantrohr vorzugsweise aus Stahl oder Kunststoff, aufweist, der an einer Hebevorrichtung über einen Angriffspunkt, bzw. Angriffsbereich, vorzugsweise einen Punkt an dem ein Bügel zum Herunterdrücken oder einen Adapteranschluss angebracht ist, um das Gestänge von einem Gabelstapler oder Traktor aus der Ferne zu bedienen, aufweist, der über ein Gestänge mit dem höhenverstellbaren Rahmen derart verbunden ist, dass durch Einwirkung auf den Angriffspunkt, bzw. Angriffsbereich, nämlich vorzugsweise über einen vorne parallel zum Grundgerüst des Transportpalettenstaplers laufenden Handbügel, der durch Herunterdrücken über ein Gestänge den höhenverstellbaren Rahmen mit seinen Greifern zumindest eine Palettenhöhe anhebt, dabei schnappt ein Zahn an einer Arretiervorrichtung (die vorzugsweise auf beiden Seiten vorhanden ist) ein, vorzugsweise in eine Aussparung am Grundgerüst des Transportpalettenstaplers, vorzugsweise sind 3 Aussparungen vorhanden (Insgesamt sind 3 Einstellungen möglich: 1. Einstellung: Greifer ganz oben, 2. Einstellung (Mitte): Greifer mit festgehaltener Palette in der Mitte zum Transportieren der Palette, 3. Einstellung: Greifer ganz unten, um eine Palette vom Boden aufzunehmen). Dieser Zahn kann durch Anziehen und wieder Loslassen, vorzugsweise über ein Gestänge, arretiert werden, indem er vorzugsweise in eine der jeweiligen Aussparungen am Grundgerüst des Transportpalettenstaplers einfährt. Dieser Zahn ist an der Hebevorrichtung, vorzugsweise auf beiden Seiten angebracht. Die Arretiervorrichtung ist innen an dem Hebegestänge montiert und eine Raste schnappt ein, vorzugsweise in eine Aussparung, nach dem der untere Rahmen hochgehoben worden ist, so dass der höhenverstellbare Rahmen mit zumindest einer Palette oder einem bereits gesammelten Palettenstapel, zumindest eine Palettenhöhe über dem Boden arretiert ist. Dies erfolgt vorzugsweise über ein Gestänge, das durch Drücken am Angriffspunkt, bzw. Angriffsbereich, vorzugsweise einem Handbügel, betätigt wird.

In einer bevorzugt Ausführungsform kann die Arretiervorrichtung auch durch einen reversiblen Verschluß gebildet werden, so dass kein Gestänge mehr notwendig ist, um die Raste zu bewegen, sondern durch Herunterdrücken der Betätigung der Höhenvorrichtung, vorzugsweise des Handgriffs, wird die Arretierung gelöst, so dass der höhenverstellbare Rahmen in einer Stellung arretiert ist.

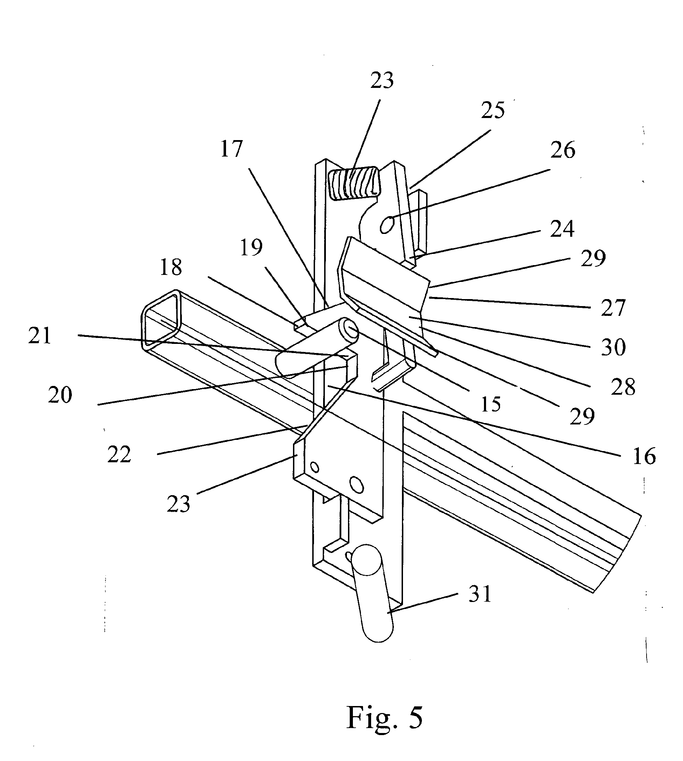

In einer bevorzugten Ausführungsform (siehe auch Figur 5) geschieht dies vorzugsweise durch einen Bolzen 15, der am Hebegestänge befestigt ist, vorzugsweise auf beiden Seiten des höhenverstellbaren Rahmens. Während am Grundgerüst eine Art Falle 16, vorzugsweise auf beiden Seiten gegenüberliegend am Grundgerüst befestigt ist, in Form eines Formkörpers, der vorzugsweise durch eine Feder vorgespannt ist, der am Grundgerüst des Transportpalettenstaplers befestigt ist und an einem Ende eine Schräge 17 von unten nach oben aufweist, die an ihrem Ende oben vorzugsweise eine kurze Ebene 18 aufweist, um dann über eine Senkrechte 19 in eine Aussparung 20 über zu gehen, die im rechten Winkel zur Senkrechte eine plane Fläche 21 aufweist, die dann wieder über eine Schräge 22 von unten nach oben wieder vorzugsweise in einer planen Fläche 23 endet, wobei sich unter der planen Fläche vorzugsweise an ihrem Ende, das gleichzeitig das andere Ende des Formkörpers ist, vorzugsweise eine Feder 31 befindet, um den Formkörper beweglich, vorzugsweise um einen Drehpunkt, am Grundgerüst zu lagern. Über diesen Formkörper ist ein unter Spannung, vorzugsweise durch eine Feder 23, stehender Löffel 24 vorhanden, der an den Formkörper durch die Spannung gedrückt wird und drehbar gelagert ist. Dieser Löffel weist einen Stiehl 25 auf, in dessen Längsmitte 26 der Drehpunkt ist und an seinem von der Schaufel 27 wegweisenden Ende mit einer Vorrichtung, wie einer Feder 23 unter Spannung gehalten wird und der an seinem Ende eine Schaufel aufweist, die gebildet wird, indem einer zum Stiel im 90° Winkel stehenden planen Innenfläche 28 zwei ebenfalls zum Stiel im 90° Winkel schräg zueinander stehende Seitenflächen 29 stehen, die zur planen Innenfläche 30 jeweils einen Innenwinkel zwischen 100 °, 110°, 120°, 130°, 140°, 150°, 160° und 170° Grad aufweisen, so dass die schräg zueinander stehenden Seitenflächen 29 mit der planen Innenfläche 28 eine Schaufel bilden. An diesen schrägen Flächen gleitet der Bolzen 15 beim Einrasten in die Falle 16 vorbei, indem er die Schaufel des Löffels weg drückt und beim Ausrasten wird der Bolzen, indem er in die Schräge 22 der Falle 16 gedrückt wird, fährt der Bolzen dann über die andere schräge Seitenfläche 29 der Schaufel aus der Falle heraus, wenn der Bolzen wieder zurückgezogen wird.

In einer weiteren bevorzugt Ausführungsform kann die Arretiervorrichtung auch durch eine Ratschenverschluß gebildet werden, so dass kein Gestänge mehr notwendig ist, um die Raste zu bewegen, sondern vorzugsweise ein an seiner Spitze auf beiden Seiten, vorzugsweise gleichseitig, angeschrägter Zahn, der vorzugsweise als Teil der Arretiervorrichtung, die vorzugsweise innen an dem Hebegestänge montiert ist, wobei der Zahn vorzugsweise durch eine Feder unter Spannung steht, wobei dieser Zahn in ein in eine entsprechende Aussparrung am Rahmen des Palettenstapler eingreift (Insgesamt sind 3 Einstellungen möglich: 1. Einstellung: Greifer ganz oben, 2. Einstellung (Mitte): Greifer mit festgehaltener Palette in der Mitte zum Transportieren der Palette, 3. Einstellung: Greifer ganz unten, um eine Palette vom Boden aufzunehmen). Das Ein- und Ausfahren des Zahns erfolgt lediglich durch Druck auf die Feder, die den Zahn unter Spannung hält, indem die Hebevorrichtung nach oben oder unten gedrückt wird.

Dieser Handhebel kann vorzugsweise über ein Rohr- im Rohrsystem, vorzugsweise stufenlos, in seinem Abstand zum Rahmen des Transportpalettenstapler verstellbar sein, so dass ein größer Hebel zum Anheben der Paletten zu Verfügung steht, so dass auch schwächere Personen den Transportpalettenstapler bedienen können. Vorzugsweise über eine Klemmfeststellung kann dieser Abstand festgestellt werden. Möglich wäre auch eine Ratschenverstellung über die der Abstand des Handhebel zum Rahmen des Transportpalettenstaplers verändert wird.

Dieser Handbügel kann in einer bevorzugten Ausführungsform eine Hebeunterstützung aufweisen, wobei diese Hebeunterstützung vorzugsweise eine Spiralfeder, Gasdruckfeder ist, die vorzugsweise zwischen Handhebel und Grundgestell montiert ist und vorzugsweise beim Hochziehen des Handhebels, während die Greifer zum Fassen einer Palette heruntergelassen werden, zusammengedrückt wird und so Energie speichert, so dass die komprimierte Spiralfeder oder Gasdruckfeder, während des Herunterdrücken des Handhebels, um also die Palette hochzuheben, durch Freigabe der gespeicherten Energie eine Hebeunterstützung leistet. Diese Spiralfeder oder Gasdruckfeder kann vorzugsweise in einfacher Ausführung montiert sein oder bevorzugt in zweifacher Ausführung montiert sein, indem jeweils eine Feder auf der linken und rechten Seite des Handhebels montiert ist. In einer bevorzugten Ausführungsform kann diese Hebeunterstützung zugeschaltet oder abgeschaltet werden, z.B. indem diese Federn in eine Vorrichtung eingehängt, eingeschwenkt werden, so dass die Federn im Kraftschluß zwischen Handhebel und Grundgestell stehen oder ausgehängt oder ausgeschwenkt werden, so dass die Federn nicht im Kraftschluß zwischen Handhebel und Grundgestell stehen.

Eine Hebeunterstützung ist auch dadurch vorzugsweise möglich, indem statt der Feder ein Zylinder vorhanden ist, der einen Kolben aufweist, der mit Druckluft, die durch eine Pumpe oder einen Kompressor erzeugt wird, den Kolben, der mit dem Zylinder zwischen Grundgestell und Handhebel montiert ist, so heraus drückt, dass der Handhebel beim Herunterdrücken, also beim Hochheben einer Palette, eine Hebeunterstützung erfährt.

Um eine weitere Palette aufzunehmen, wird der mobile Transportpalettenstapler über eine leere Transportpalette bewegt, um so dann die Greifer aus der horizontalen Stellung in eine offene vertikale Stellung zu bringen. Dabei stützen sich die bereits gestapelten Transportpalette auf der nun aufzunehmenden Palette ab, in die nun die abgesenkten Greifer eingreifen, um diese neu hinzugekommene Palette mit den bereits gestapelten Transportpaletten hochzuheben.

In einer bevorzugten Ausführungsform weist das Grundgerüst innen eine Verkleidung mit Blech auf, so dass die Transportpaletten sich nicht verhacken können und der höhenverstellbare Rahmen weist an seinem Eingang noch Leitbleche auf, die vorne zur Aufnahme der Transportpalette weiter auseinander stehen und sich vorzugsweise nach Innen auf den Umfang des inneren des Grundgerüstes verengen, um die Transportpalette besser in das Grundgerüst einführen zu können.

Eine andere Möglichkeit den höhenverstellbaren Rahmen im angehobenen Zustand, also in einer Transportpalettenhöhe zu arretieren, sind etwas über der Transportpalettenhöhe jeweils vorzugsweise vier Stifte vorzugsweise horizontal ausfahrbar bereitzustellen, die die Palette oder den Palettenstapel halten. Diese Stifte können über ein Gestänge mechanisch, elektrisch, hydraulisch oder pneumatisch ausgefahren oder eingefahren werden.

Eine andere Möglichkeit ist eine Arretierung des Palettenstapels über vorzugsweise durch Druck eindrückbare Schnappverschlüsse, die derart aufgebaut sind, dass sie bei Berührung mit einer Palette, die hochgehoben wird, eingedrückt werden und nach dem eine Palette die'Schnappverschlüsse nach dem Hochfahren passiert hat, wieder ausfahren und die gerade hochgehobene Palette festhalten, indem die Schnappverschlüsse wieder ausfahren. Diese Schnappverschlüsse sind unten vorzugsweise angeschrägt, vorzugsweise im 45° Winkel, wobei vorzugsweise die Hypothenuse des Dreiecks, das den Schnappverschluß bildet, mit der Palette, die hochgehoben wird, in Berührung kommt. Derartige Schnappverschlüsse können vorzugsweise eine Feder aufweisen, die ein Ein- und Ausfahren der Schnappverschlüsse gewährleistet. So kann eine Palette nach der anderen aufgesammelt und im erfindungsgemäßen Transportpalettenstapler gestapelt werde. Diese Federkraft kann deaktiviert werden, indem der Raum vergrößert wird, in dem sich die Feder befindet, so dass sie entlastet wird und so die Transportpaletten herausfallen können. Ansonsten wird der Transportpalettenstapler nach erfolgter Aufsammlung der Paletten von oben mit vorzugsweise einem Gabelstapler entladen werden.

Bevorzugt sind an den Längsholmen, vorzugsweise Stangen oder Rohre aus vorzugsweise Stahl oder Kunststoff, vorzugsweise mechanisch, elektrisch, hydraulisch oder pneumatisch, bevorzugt mechanisch bewegbare Greifer vorhanden, die unter die oberen Längsbretter einer Transportpalette eingreifbar sind und die Transportpalette festhalten und die Transportpalette durch eine Hebevorrichtung zumindest eine Transportpalettenhöhe hochhebbar ist, so dass der Transportpalettenstapler sich über eine weitere Transportpalette bewegen kann, beziehungsweise fahren kann. Um eine weitere Palette aufzunehmen, wird der mobile Transportpalettenstapler über eine leere Transportpalette bewegt, um so dann die Greifer aus der horizontalen Stellung in eine offene vertikale Stellung zu bringen. Dabei stützen sich die bereits gestapelten Transportpaletten auf der nun aufzunehmenden Palette ab, in die nun die abgesenkten Greifer eingreifen, indem sie aus einer vertikalen Stellung in eine horizontale Stellung gebracht werden, um diese neu hinzugekommene Palette mit den bereits gestapelten Transportpaletten hochzuheben.

Diese Greifer sind vorzugsweise aus Metall und weisen vorzugsweise die Form einer Klaue auf.

Diese Greifer können vorzugsweise mechanisch, elektrisch, hydraulisch oder pneumatisch ausgefahren oder eingefahren werden.

Die Greifer sind vorzugsweise auf zwei gegenüberliegenden Seiten, jeweils zumindest zwei Greifer, drehbar auf einer Längsachse, vorzugsweise unten am höhenverstellbaren Rahmen gelagert, d.h. diese Greifer sind vorzugsweise mit der drehbaren Achse verschweißt. Durch drehen der Achse(n) werden die senkrecht stehenden Greifer in eine horizontale Stellung gebracht, so dass sie unter die oberen Längsbretter einer Transportpalette greifen können.

In einer bevorzugten Ausführungsform werden die Greifer über ein Gestänge betätigt, das mit den beiden Achsen drehbar verbunden ist, an der die Greifer befestigt sind, wobei das Gestänge ein T-förmiges Griffstück aufweist, wobei der senkrechte Teil des T's der Griff ist und an den horizontalen Teil des T's, drehbar gelagert, auf den zwei Seiten jeweils vorzugsweise eine Stange, bevorzugt eine Gewindestange 16 aufweist, die vorzugsweise die Länge einstellen kann, wobei die Gewindestangen 16 wiederum jeweils drehbar an den beiden Achsen befestigt sind, die die Greifer aufweisen.

In einer bevorzugten Ausführungsform werden die Greifer über eine Fernbedienung, die vorzugsweise am Handgriff, oder dort wo sie benötigt wird, wie einem Gabelstapler oder Traktor, befestigt ist, wie einen Seilzug, Gestänge, mittels Stellmotoren, hydraulisch, pneumatisch betätigt, das mit den beiden Achsen verbunden ist, dabei werden die beiden Achsen, an der die Greifer befestigt sind, vorzugsweise über eine Feder unter Spannung gehalten, so dass die Greifer an den Achsen in einer horizontale Stellung sind, so dass sie unter die oberen Längsbretter einer Transportpalette greifen würden, die sich bereits im Transportpalettenstapler befindet. Durch Betätigen der Fernbedienung, wie dem Ziehen an vorzugsweise einem Seilzug, der mit diesen Achsen verbunden ist oder einem Gestänge, das mit diesen Achsen verbunden ist, werden die Greifer in eine senkrechte Stellung gebracht, um eine Palette freizugeben und/oder eine neue Palette aufzunehmen.

In einer weiteren bevorzugten Ausführungsform werden die Greifer direkt, ohne gemeinsam an Achsen angebracht zu sein, über eine Fernbedienung, die vorzugsweise am Handgriff oder dort wo sie benötigt wird, einem Gabelstapler oder Traktor, befestigt ist, wie einen Seilzug, Gestänge, mittels Stellmotoren, hydraulisch, pneumatisch direkt betätigt, vorzugsweise über eine Feder unter Spannung gehalten, so dass die Greifer in einer horizontalen Stellung sind, so dass sie unter die oberen Längsbretter einer Transportpalette greifen würden, die sich bereits im Transportpalettenstapler befindet. Durch Betätigen der Fernbedienung, wie dem Ziehen an vorzugsweise einem Seilzug, der mit diesen Greifern verbunden ist oder einem Gestänge, das mit diesen Greifern verbunden ist, werden die Greifer in eine senkrechte Stellung gebracht, um eine Palette freizugeben und/oder eine neue Palette aufzunehmen.

Diese Fernbedienung könnte auch über Funk, Infrarotlicht oder Ultraschall erfolgen.

Die Hebevorrichtung weist einen Angriffspunkt, bzw. Angriffsbereich, bzw. Angriffsbereich auf, der über ein Gestänge mit dem höhenverstellbaren Rahmen derart verbunden ist, dass durch Einwirkung auf den Angriffspunkt, bzw. Angriffsbereich der höhenverstellbare Rahmen mit seinen Greifern zumindest eine Palettenhöhe anhebbar ist. Ein derartiger Angriffspunkt, bzw. Angriffsbereich ist ein Drehpunkt, an den ein Handbügel einwirkt oder ein Adapter, der mit einem Gabelstapler oder Traktor verbunden werden kann, wobei dieser Adapter mechanisch das Gestänge am Transportpalettenstapler mit einem Gestänge im Gabelstapler oder Traktor verbindet. Eine andere Möglichkeit besteht darin, dass der Adapter eine Steuerungseinheit am Gabelstapler oder Traktor mit einem Elektromotor verbindet, der das Gestänge am Transportpalettenstapler betätigt. Eine weitere Möglichkeit besteht darin, dass der Adapter eine Steuerungseinheit am Gabelstapler oder Traktor mit einer hydraulischen, pneumatischen Vorrichtung zur Bedienung der Greifer und/oder Hebevorrichtung am Transportpalettenstapler verbindet.

Die Hebevorrichtung kann vorzugweise mechanisch, elektrisch, hydraulisch oder pneumatisch hoch und herunter gefahren werden.

In einer weiteren bevorzugten Ausführungsform weist der erfindungsgemäße mobile Transportpalettenstapler auf zwei gegenüberliegenden Seiten jeweils zumindest zwei Greifer auf (also insgesamt vier Greifer), die über einen Kreisförderer antreibbar sind. Dabei werden die Greifer jeweils an einer über Flur angebrachten endlosen, in einer Schiene vorzugsweise mit Fahrwerken geführten Zugkette angebracht, die vorzugsweise über ein Getriebe, das vorzugsweise über eine Handkurbel, einen elektrischen Motor angetrieben wird. Dabei werden die Greifer, sobald sie unter die oberen Längsbretter einer Transportpalette eingreifen können aus der Vertikalen in die Horizontale und umgekehrt gebracht, um so die Palette hochzuheben. Das Verstellen der Greifer aus der Vertikalen in die Horizontale kann erfolgen, indem die Greifer über eine Verstellvorrichtung aus der Vertikalen in die Horizontale und umgekehrt gebracht werden und dabei arretiert werden. Eine weitere Möglichkeit ist, dass die Greifer in der horizontalen Stellung bleiben und der Kreisförderer in der Schiene vorzugsweise mit Fahrwerken geführten Zugkette erst unten auf der Höhe der Längsbretter der Transportpalette über vorzugsweise eine Ablenkvorrichtung so nahe an die Transportpalette gebracht werden, dass sie unter die oberen Längsbretter einer Transportpalette greifen können und sie hochheben können. Diese Ablenkvorrichtung kann so aussehen, dass die Zugkette durch eine Andrückvorrichtung in die oberen Längsbretter einer Transportpalette gedrückt werden, so bald die Greifer auf der Höhe der oberen Längsbretter einer Transportpalette sind.

Um eine weitere Palette aufzunehmen, wird der mobile Transportpalettenstapler über eine leere Transportpalette bewegt, um so dann die Greifer aus der horizontalen Stellung in eine offene vertikale Stellung zu bringen. Dabei stützen sich die bereits gestapelten Transportpaletten auf der nun aufzunehmenden Palette ab, in die nun die abgesenkten Greifer eingreifen, um diese neu hinzugekommene Palette mit den bereits gestapelten Transportpaletten hochzuheben.

Der mobile Transportpalettenstapler weist Vorrichtungen zur Mobilität auf, wie vorzugsweise Räder, Rollen oder Angriffspunkt, bzw. Angriffsbereiche, um von einem Gabelstapler oder Traktor bewegt zu werden.

In einer bevorzugten Ausführungsform weist der mobile Transportpalettenstapler einen Adapter für einen Gabelstapler oder Traktor auf, so dass er von einem Gabelstaplers oder Traktors bedienbar ist. Dieser Adapter dient im wesentlichen dazu die Greifer zu bedienen. Dies ist möglich, indem das Gestänge zur Bedienung der Greifer mit einem Gestänge am Gabelstapler oder Traktor verbunden wird und nun vom Gabelstapler oder Traktor bedienbar ist.

Bei einer weiteren Ausführungsform wird an einem Gabelstapler oder Traktor nicht direkt die am Transportpalettenstapler angebrachte Hebevorrichtung verwendet, die über ein Gestänge am Transportpalettenstapler bedient werden könnte, wobei dieses wiederum über einen Adapter an einem Gabelstapler oder Traktor bedient werden könnte. Eine Bedienung ohne die am Transportpalettenstapler angebrachte Hebevorrichtung ist möglich, indem das Gestänge zur Bedienung der Höhenverstellung mit einem Gestänge am Gabelstapler oder Traktor verbunden wird und nun vom Gabelstapler oder Traktor bedienbar ist. Bevorzugt soll hier jedoch diese Hebevorrichtung nicht verwendet werden, sondern es wird mit dem Transportpalettenstapler über eine Palette gefahren und vorzugsweise wird mit einem Gabelstapler oder Hubwagen die Palette angehoben, wobei eine Arretierung des Palettenstapels über vorzugsweise durch Druck eindrückbare Schnappverschlüsse, die derart aufgebaut sind, dass sie bei Berührung mit einer Palette, die hochgehoben wird, eingedrückt werden und nach dem eine Palette die Schnappverschlüsse nach dem Hochfahren passiert hat, wieder ausfahren und die gerade hochgehobene Palette festhalten, indem die Schnappverschlüsse wieder ausfahren. Diese Schnappverschlüsse sind unten vorzugsweise angeschrägt, vorzugsweise im 45° Winkel, wobei vorzugsweise die Hypotenuse des Dreiecks, das der Schnappverschluß bildet, mit der Palette, die hochgehoben wird, in Berührung kommt. Derartige Schnappverschlüsse können vorzugsweise eine Feder aufweisen, die ein Ein- und Ausfahren der Schnappverschlüsse gewährleistet.

Eine weitere Möglichkeit der Arretierung ist, dass die Palette nach dem Hochheben mit an jeder Längsseite der Palette horizontal eingreifenden Stiften festgehalten werden, die mechanisch, elektrisch, hydraulisch oder pneumatisch aus- oder eingefahren werden können.

Die gestapelten Paletten können dann von oben z.B. mit einem Gabelstapler entnommen werden.

In einer besonderen Ausführungsform ist es jedoch auch möglich, dass der Transportpalettenstapler in Höhe der zweiten Palette von unten ein- und ausfahrbare Haltevorrichtungen zum Halten des darüberliegenden Palettenstapels aufweist, so dass die unterste Palette durch Öffnen der Greifer absetzbar ist, indem die Höhenverstellung mit den Paletten, bei gleichzeitigem Festhalten der untersten Palette mit den Greifern abgesenkt wird und die darüberliegenden Paletten mit den ein- und ausfahrbaren Haltevorrichtungen oben gehalten werden und daraufhin die Greifer geöffnet werden, so dass die unterste Palette abgesetzt werden kann und vorzugsweise mit einem Hubwagen entnommen werden kann, umgekehrt kann auch'mit einem Hubwagen eine Palette zur Aufnahme herangebracht werden.

Vorteile der Erfindung sind, dass-ein einfacher mobiler auch rein mechanisch zu bedienender Transportpalettenstapler zur Verfügung zu stellen, der auch mittels einer Adaptervorrichtung an selbstfahrenden Fahrzeugen, wie einem Gabelstapler, Traktopr, Unimog oder anderen LKWs anbringbar ist.

### Figuren

Figur 1 zeigt den erfindungsgemäßen Transportpalettenstapler in perspektivischer Draufsicht.
Figur 2 zeigt den erfindungsgemäßen Transportpalettenstapler von vorn.
Figur 3 zeigt den erfindungsgemäßen Transportpalettenstapler von der Seite.
Figur 4 zeigt den erfindungsgemäßen Transportpalettenstapler in Draufsicht.
Figur 5 zeigt eine bevorzugte Arretiervorrichtung.

### Figur 1

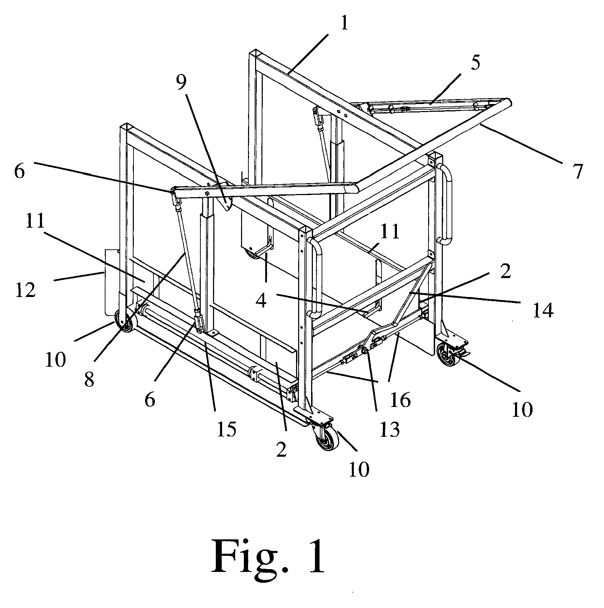

Figur 1 zeigt den erfindungsgemäßen Transportpalettenstapler in perspektivischer Draufsicht. Dabei ist in Draufsicht das U-förmige Grundgerüst 1 zu sehen.

Im unteren Bereich des Transportpalettenstaplers befindet sich ein höhenverstellbarer Rahmen 2, der an einer Hebevorrichtung 5 über einen Angriffspunkt, bzw. Angriffsbereich 6, einen Bügel 7 zum Herunterdrücken aufweist, der über ein Gestänge 8 mit dem höhenverstellbaren Rahmen 2 derart verbunden.ist, dass durch Einwirkung auf den Angriffspunkt, bzw. Angriffsbereich, 6, nämlich ein vorne parallel zum Grundgerüst der Transportpalettenstaplers laufender Handbügel 7, der durch Herunterdrücken über ein Gestänge 8 den höhenverstellbaren Rahmen 2 aus zwei Holmen seitlich mit seinen bewegbaren Greifern 4, wobei jeweils zwei Greifer an jeweils einer Achse 15 auf beiden Seiten angebracht sind, zumindest eine Palettenhöhe anhebt, dabei schnappt ein Zahn an einer Arretierungsvorrichtung 9 (insgesamt 3 Einstellungen möglich: 1. Einstellung: Greifer ganz oben, 2. Einstellung (Mitte): Greifer mit festgehaltener Pallette in der Mitte zum Transportieren der Palette, 3. Einstellung: Greifer ganz unten, um eine Palette vom Boden aufzunehmen), das durch Anziehen und wieder Loslassen arretiert werden kann, das innen an dem Hebegestänge montiert ist, in einer Raste ein, nach dem der untere Rahmen 2 hochgehoben worden ist, so dass der höhenverstellbare Rahmen 2 mit zumindest einer Palette oder einem bereits gesammelten Palettenstapel, zumindest eine Palettenhöhe über dem Boden arretiert wird. Dies erfolgt vorzugsweise über ein Gestänge 8, das durch Drücken am Angriffspunkt, bzw. Angriffsbereich 6 über den Handbügel 7, betätigt wird.

Unten am Grundgestell 1 sind vier Räder 10 zum Rollen angebracht.

Des Weiteren weist das Grundgerüst 1 innen eine Verkleidung 11 mit Blech auf, so dass die Transportpaletten sich nicht verhacken können und der höhenverstellbare Rahmen 2 weist an seinem Eingang noch Leitbleche 12 auf, die vorne zur Aufnahme der Transportpalette weiter auseinander stehen und sich nach Innen auf den Umfang des inneren des Grundgerüstes verengen, um die Transportpalette besser in das Grundgerüst einführen zu können.

Die Greifer 4 werden über ein Gestänge 13 betätigt, das mit den beiden Achsen 15 drehbar verbunden ist, an der die Greifer 4 befestigt sind, wobei das Gestänge ein T-förmiges Griffstück 14 aufweist, wobei der senkrechte Teil des T's der Griff ist und an dem horizontalen Teil des T's drehbar gelagert auf den zwei Seiten jeweils eine Stange aufweist, bevorzugt eine Gewindestange 16, über die die Länge verstellbar ist, wobei die Gewindestangen 16 wiederum jeweils drehbar an den beiden Achsen befestigt sind, die die Greifer 4 aufweisen.

### Figur 2

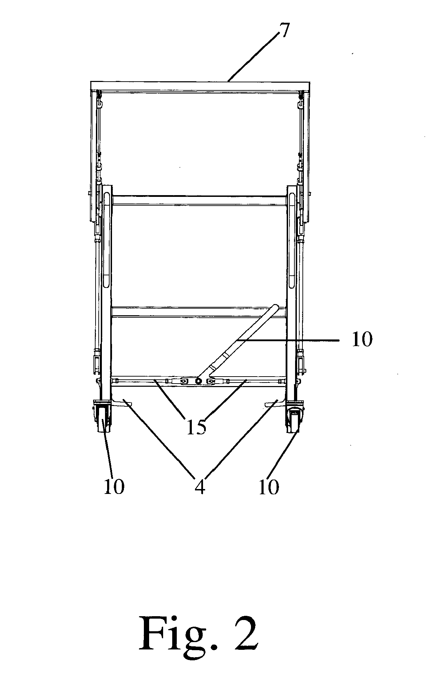

Figur 2 zeigt die Vorderansicht des erfindungsgemäßen Transportpalettenstaplers und zeigt den Handbügel 7.

Die Greifer 4 werden über ein GesLänge 13 betätigt, das mit den beiden Achsen 15 drehbar verbunden ist, an der die Greifer befestigt sind, wobei das Gestänge ein T-förmiges Griffstück 14 aufweist, wobei der senkrechte Teil des T's der Griff ist und an dem horizontalen Teil des T's drehbar gelagert auf den zwei Seiten jeweils eine Stange aufweist, bevorzugt eine Gewindestange 16, über die die Länge verstellbar ist, wobei die Gewindestangen 16 wiederum jeweils drehbar an den beiden Achsen befestigt sind, die die Greifer 4 aufweisen.

Unten am Grundgestell sind die Räder 10 angebracht.

### Figur 3

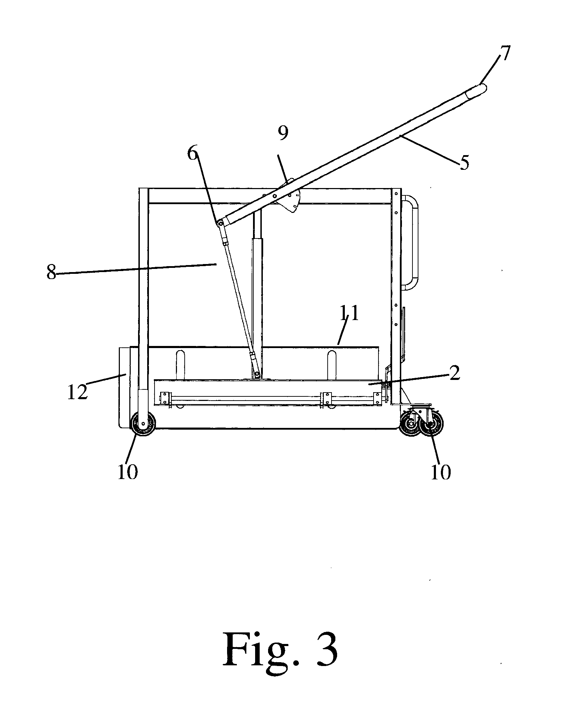

Figur 3 zeigt die Seitenansicht des erfindungsgemäßen Transportpalettenstaplers.

Dabei ist die Arretierungsvorrichtung 9 zu sehen. Im unteren Bereich des Transportpalettenstaplers befindet sich ein höhenverstellbarer Rahmen 2, der an einer Hebevorrichtung 5 über einen Angriffspunkt, bzw. Angriffsbereich 6, einen Bügel 7 zum Herunterdrücken aufweist, der über ein Gestänge 8 mit dem höhenverstellbaren Rahmen 2 derart verbunden ist, dass durch Einwirkung auf den Angriffspunkt, bzw. Angriffsbereich 6, nämlich ein vorne parallel zum Grundgerüst der Transportpalettenstaplers laufender Handbügel 7, der durch Herunterdrücken über ein Gestänge 8 den höhenverstellbaren Rahmen 2 aus zwei Holmen 3 mit seinen bewegbaren Greifern 4, wobei jeweils zwei Greifer an jeweils einer Achse 15 auf beiden Seiten angebracht sind, zumindest eine Palettenhöhe anhebt.

Des Weiteren weist das Grundgerüst innen eine Verkleidung 11 mit Blech auf, so dass die Transportpaletten sich nicht verhacken können und der höhenverstellbare Rahmen weist an seinem Eingang noch LeiLbleche 12 auf, die vorne zur Aufnahme der Transportpalette weiter auseinander stehen und sich nach Innen auf den Umfang des inneren des Grundgerüstes verengen, um die Transportpalette besser in das Grundgerüst einführen zu können.

### Figur 4

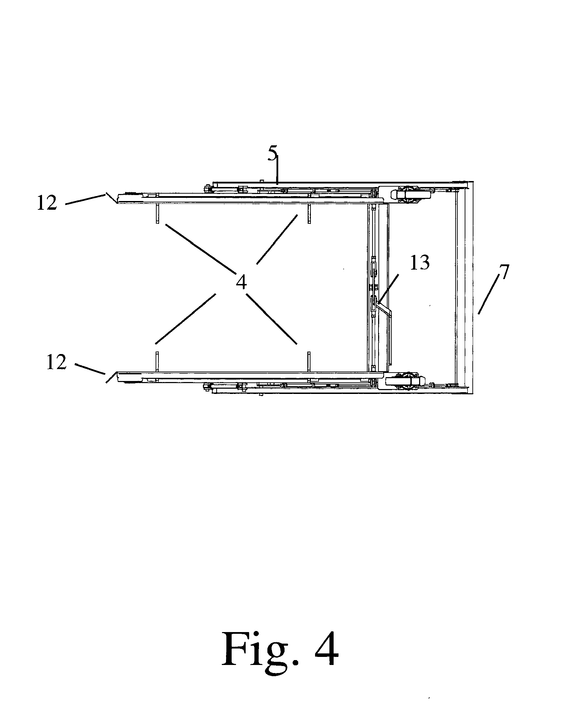

Figur 4 zeigt die Draufsicht des erfindungsgemäßen Transportpalettenstaplers. So ist die Hebevorrichtung 5 mit dem Handhebel 7 sichtbar.

Des Weiteren weist das Grundgerüst innen eine Verkleidung 11 mit Blech auf, so dass die Transportpaletten sich nicht verhacken können und der höhenverstellbare Rahmen weist an seinem Eingang noch Leitbleche 12 auf, die vorne zur Aufnahme der Transportpalette weiter auseinander stehen und sich nach Innen auf den Umfang des inneren des Grundgerüstes verengen, um die Transportpalette besser in das Grundgerüst einführen zu können.

Im unteren Bereich des Transportpalettenstaplers befindet sich ein höhenverstellbarer Rahmen, der an einer Hebevorrichtung über einen Angriffspunkt, bzw. Angriffsbereich, einen Bügel 7 zum Herunterdrücken aufweist, der über ein Gestänge mit dem höhenverstellbaren Rahmen derart verbunden ist, dass durch Einwirkung auf den Angriffspunkt, bzw. Angriffsbereich, nämlich ein vorne parallel zum Grundgerüst der Transportpalettenstaplers laufender Handbügel 7 ist, der durch Herunterdrücken über ein Gestänge den höhenverstellbaren Rahmen mit seinen Greifern 4 zumindest eine Palettenhöhe anhebt.

Die Greifer 4 werden über ein Gestänge betätigt, das mit den beiden Achsen drehbar verbunden isL, an der die Greifer 4 befestigt sind, wobei das Gestänge ein T-förmiges GriffsLück aufweist, wobei der senkrechte Teil des T's der Griff ist und an dem horizontalen Teil des T's drehbar gelagert auf den zwei Seiten jeweils eine Stange aufweist, bevorzugt eine Gewindestange 16, mit der die Länge erstellbar ist, wobei die Gewindestangen 16 wiederum jeweils drehbar an den beiden Achsen befestigt sind, die die Greifer 4 aufweisen.

Zusätzlich sind die Räder von oben zu sehen.

## Patentansprüche

1. Mobiler Tränsportpalettenstapler, der in Draufsicht ein U-förmiges Grundgerüst 1, das also auf einer Seite nach vorne offen ist, aufweist, dessen Innenmaße den erweiterten Umfang einer Transportpalette aufweist, **dadurch gekennzeichnet, dass** im unteren Bereich des Palettenstaplers ein höhenverstellbarer Rahmen 2 vorhanden ist, wobei an zumindest zwei Holmen bewegbare Greifer 4 vorhanden sind, die unter die oberen Längsbretter einer Transportpalette eingreifbar sind und die Transportpalette festhalten und die Transportpalette durch eine Hebevorrichtung zumindest eine Transportpalettenhöhe hochhebbar ist, so dass der Transportpalettenstapler sich über eine weitere Transportpalette bewegen kann, wobei der mobile Transportpalettenstapler Vorrichtungen zur Mobilität aufweist.

2. Mobiler Transportpalettenstapler nach Anspruch 1, **dadurch gekennzeichnet, dass** die Greifer 4 und/oder Hebevorrichtung 5 mechanisch, hydraulisch, pneumatisch oder elektrisch bewegbar sind.

3. Mobiler Transportpalettenstapler nach Anspruch 1 bis 2, **dadurch gekennzeichnet, dass** auf zwei gegenüberliegenden Seiten jeweils zumindest zwei Greifer 4 drehbar auf einer Längsachse 15 am höhenverstellbaren Rahmen 2 gelagert sind.

4. Mobiler Transportpalettenstapler nach Anspruch 1 bis 2, **dadurch gekennzeichnet, dass** auf zwei gegenüberliegenden Seiten jeweils zumindest zwei Greifer 4 am höhenverstellbaren Rahmen 2 höhenverschiebbar auf einer Längsachse 15 gelagert sind.

5. Mobiler Transportpalettenstapler nach Anspruch 1 bis 2, **dadurch gekennzeichnet, dass** auf zwei gegenüberliegenden Seiten jeweils zumindest zwei Greifer 4 über einen Kreisförderer antreibbar sind.

6. Mobiler Transportpalettenstapler nach Anspruch 1 bis 3, **dadurch gekennzeichnet, dass** die Greifer 4 über ein Gestänge 13 betätigt werden, die mit den beiden Achsen 15 drehbar verbunden sind, an denen die Greifer 4 befestigt sind, wobei das Gestänge 13 ein T-förmiges Griffstück 14 aufweist, wobei der senkrechte Teil des T's der Griff 14 ist und an dem horizontalen Teil des T's drehbar gelagert auf den zwei Seiten jeweils eine Gewindestange 16 vorhanden ist, die in der Länge verstellbar ist, wobei die Gewindestangen 16 wiederum jeweils drehbar an den beiden Achsen 15 befestigt sind, die die Greifer 4 aufweisen.

7. Mobiler Transportpalettenstapler nach Anspruch 1 bis 4, **dadurch gekennzeichnet, dass** die Hebevorrichtung einen Angriffspunkt, bzw. Angriffsbereich, bzw. Angriffsbereich 6 aufweist, der über ein Gestänge mit dem höhenverstellbaren Rahmen 2 derart verbunden ist, dass durch Einwirkung auf den Angriffspunkt, bzw. Angriffsbereich 6 der höhenverstellbare Rahmen 2 mit seinen Greifern 4 zumindest eine Palettenhöhe anhebbar ist.

8. Mobiler Transportpalettenstapler nach Anspruch 1 bis 5, **dadurch gekennzeichnet, dass** der Transportpalettenstapler in Höhe der zweiten Palette von unten ein- und ausfahrbare Haltevorrichtungen zum Halten des darüberliegenden Palettenstapels aufweist, so dass die unterste Palette durch Öffnen der Greifer 4 absetzbar ist.

9. Mobiler Transportpalettenstapler nach Anspruch 6, **dadurch gekennzeichnet, dass** der Transportpalettenstapler keine Greifer und Vorrichtungen zur Mobilität aufweist, sondern in Höhe der zweiten Palette von unten ein- und ausfahrbare Haltevorrichtungen zum Halten des darüberliegenden Palettenstapels aufweist.

10. Mobiler Transportpalettenstapler nach Anspruch 1 bis 9, **dadurch gekennzeichnet, dass** er einen Adapter für einen Gabelstapler oder Traktor aufweist, so dass er von einem Gabelstaplers oder Traktors bedienbar ist.
